# EUROPEAN PATENT APPLICATION

(11) **EP 4 135 399 A1**
(43) Date of publication of application: **15.02.2023**
(21) Application number: 21796161.4
(22) Date of filing: 30.04.2021
(51) Int. Cl.: H04W 28/20, H04W 28/22, H04L 1/00, H04W 72/04

(54) **WIRELESS COMMUNICATION TRANSMISSION METHOD AND RELATED APPARATUS**

(30) Priority: 30.04.2020 CN 202010368087
(71) Applicant: Huawei Technologies Co., Ltd., Longgang District, Shenzhen, Guangdong 518129 (CN)
(72) Inventor: GAN, Ming, Shenzhen, Guangdong 518129 (CN); ZHOU, Yifan, Shenzhen, Guangdong 518129 (CN); LIANG, Dandan, Shenzhen, Guangdong 518129 (CN); YU, Jian, Shenzhen, Guangdong 518129 (CN); LI, Yunbo, Shenzhen, Guangdong 518129 (CN); GUO, Yuchen, Shenzhen, Guangdong 518129 (CN); HU, Mengshi, Shenzhen, Guangdong 518129 (CN)
(74) Representative: Gill Jennings & Every LLP
(86) International application number: PCT/CN2021/091564
(87) International publication number: WO 2021/219136

(57) **Abstract**

This application provides a method for sending a trigger frame in a wireless local area network. The method includes: An AP generates a physical layer protocol data unit PPDU, where the PPDU includes one or more trigger frames, each trigger frame corresponds to one frequency segment, and each trigger frame is used to schedule at least one or more stations parking on the corresponding frequency segment; and sends the one or more trigger frames in the PPDU, where each trigger frame is carried in the corresponding frequency segment.

## Description

### TECHNICAL FIELD

This application relates to the field of communication technologies, and in particular, to a wireless communication method and related apparatus.

### BACKGROUND

A WLAN (Wireless Local Area Network, wireless local area network) develops from the 802.11a/g to the 802.11n, the 802.11ac, and now reaches the 802.11ax and the 802.11be that are under discussion. A bandwidth and a quantity of space-time streams that are allowed to be transmitted by the WLAN are as follows:

**Table 1 Maximum transmission bandwidth and maximum transmission rate allowed in each IEEE 802.11 version**

| | 802.11a/g | 802.11n (HT) | 802.11ac (VHT) | 802.11ax (HE) | 802.11be (EHT) (target) |
|---|---|---|---|---|---|
| Bandwidth | 20 MHz | 20/40 MHz | 20/40/80/160 MHz | 20/40/80/160 MHz | 20/40/80/160/240/320 MHz |
| Supported maximum data rate | 54 Mbps | 600 Mbps | 6.9 Gbps | 9.6 Gbps | Not less than 30 Gbps |

The 802.11n standard is also referred to as HT (High Throughput, high throughput). The 802.11ac standard is referred to as VHT (Very High Throughput, very high throughput). The 802.11ax (Wi-Fi 6) standard is referred to as HE (High Efficient, high efficiency). The 802.11be (Wi-Fi 7) standard is referred to as EHT (Extremely High Throughput, extremely high throughput). Standards prior to HT, such as the 802.11 a/b/g, are collectively referred to as non-HT (non-high throughput). The 802.11b uses a non-OFDM (Orthogonal Frequency Division Multiplexing, orthogonal frequency division multiplexing) mode, and therefore is not listed in Table 1.

Improving flexibility or efficiency of resource utilization has always been a concern in this field.

### SUMMARY

To improve flexibility or efficiency of resource utilization, one aspect of this application provides a method for sending a trigger frame in a wireless local area network. The method includes: An AP generates a physical layer protocol data unit PPDU, where the PPDU includes one or more trigger frames, each trigger frame corresponds to one frequency segment, and each trigger frame is used to schedule at least one or more stations parking on the corresponding frequency segment; and sends the one or more trigger frames in the PPDU, where each trigger frame is carried in the corresponding frequency segment. Preferably, each trigger frame is used to schedule only one or more stations parking on the corresponding frequency segment. Specifically, different trigger frames have different content but a same length.

Correspondingly, according to another aspect, a station may receive a trigger frame only on a frequency segment on which a sensed 20 MHz is located, and determine, based on the trigger frame, whether the station is to be scheduled. If being scheduled, the station may send an uplink common physical layer preamble only on each 20 MHz channel on a frequency segment on which a bandwidth of an uplink PPDU of a station is located and that is indicated in the trigger frame, or only on each 20 MHz channel on a frequency segment on which an allocated resource unit is located. Correspondingly, the station sends a data part of the uplink PPDU on the resource unit allocated to the station.

Correspondingly, in still another aspect, an AP receives an uplink multi-user PPDU sent by a station, and may reply with Acknowledgement information of the uplink multi-user PPDU based on a frequency segment. For example, the AP replies with different Acknowledgement frames on different frequency segments. Preferably, the AP may send, on the frequency segment, only an Acknowledgement frame of an uplink PPDU of a station parking on the frequency segment. Specifically, the Acknowledgement frames on different frequency segments may have different content but a same length.

Correspondingly, according to another aspect, after sending an uplink PPDU, a station may receive Acknowledgement information of the uplink PPDU only on a frequency segment on which a 20 MHz sensed by the station is located.

Correspondingly, according to another aspect, a communications apparatus that can be used as an access point to perform the foregoing method is provided, for example, an access point or a chip in a wireless local area network.

Correspondingly, according to another aspect, a communications apparatus that can be used as a station to perform the foregoing method is provided, for example, a non-AP station or a chip in a wireless local area network.

The foregoing aspects are implemented based on a frequency segment, so that flexibility or efficiency of resource utilization can be improved.

### BRIEF DESCRIPTION OF DRAWINGS

FIG. 1A is a schematic diagram of a network structure according to an embodiment of this application;
FIG. 1B is a schematic diagram of a structure of a communications apparatus according to an embodiment of this application;
FIG. 1C is a schematic diagram of a structure of a chip according to an embodiment of this application;
FIG. 2 is a schematic diagram of an example of channel allocation in an 802.11 system;
FIG. 3 is a simple schematic diagram of a frequency segment and a station parking on the frequency segment according to an implementation;
FIG. 4 is a schematic flowchart of uplink transmission and a simple schematic diagram of a frame structure according to an implementation (an AP sends a trigger frame, a station sends an uplink multi-user PPDU based on the trigger frame, and the AP sends an Acknowledgement frame of the uplink multi-user PPDU);
FIG. 5 is a simple schematic diagram of a structure of a trigger frame according to an implementation;
FIG. 6 is a simple schematic diagram of a structure of a user information field in a trigger frame according to an implementation;
FIG. 7a to FIG. 7b are simple schematic diagrams of positions of resource units according to an implementation;
FIG. 8 is a simple schematic diagram of a frame structure of an uplink multi-user PPDU according to an implementation;
FIG. 9 is a simple schematic diagram of six puncturing patterns in an 80 MHz bandwidth according to an implementation; and
FIG. 10 is a simple schematic diagram of a structure of an Acknowledgement frame according to an implementation.

### DESCRIPTION OF EMBODIMENTS

The following further describes specific embodiments of this application in detail with reference to accompanying drawings.

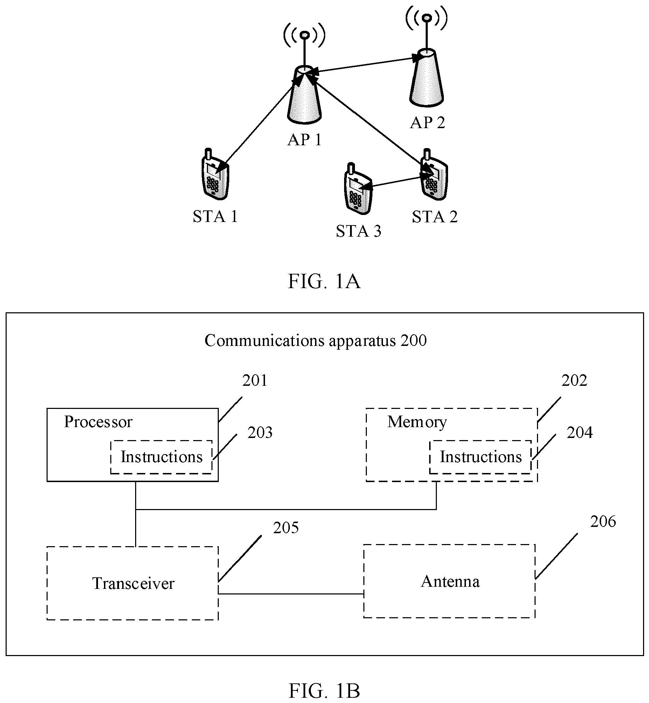

FIG. 1A is used as an example to describe a network structure to which a data transmission method in this application is applicable. FIG. 1A is a schematic diagram of a network structure according to an embodiment of this application. The network structure may include one or more access point (access point, AP) stations and one or more non-access-point stations (non access point station, non-AP STA). For ease of description, an access point station is referred to as an access point (AP), and a non-access point station is referred to as a station (STA) in this specification. The APs are, for example, AP 1 and AP 2 in FIG. 1A, and the STAs are, for example, STA 1, STA 2, and STA 3 in FIG. 1A.

The access point may be an access point used by a terminal device (such as a mobile phone) to access a wired (or wireless) network, and is mainly deployed at home, in a building, and in a campus. A typical coverage radius is tens of meters or more than 100 meters. Certainly, the access point may alternatively be deployed outdoors. The access point is equivalent to a bridge that connects the wired network and the wireless network. A main function of the access point is to connect various wireless network clients together and then connect the wireless network to the Ethernet. Specifically, the access point may be a terminal device (such as a mobile phone) or a network device (such as a router) with a wireless fidelity (wireless-fidelity, Wi-Fi) chip. The access point may be a device that supports the 802.1 The standard. Alternatively, the access point may be a device that supports a plurality of wireless local area network (wireless local area networks, WLAN) standards of the 802.11 family such as the 802.11be, 802.11ax, 802.11ac, 802.11n, 802.11g, 802.11b, and 802.11a. The access point in this application may be a high efficiency (high efficient, HE) AP or an extremely high throughput (extremely high throughput, EHT) AP, or may be an access point applicable to a future Wi-Fi standard.

The access point may include a processor and a transceiver. The processor is configured to control and manage an action of the access point, and the transceiver is configured to receive or send information.

The station may be a wireless communications chip, a wireless sensor, a wireless communications terminal, or the like, and may also be referred to as a user. For example, the station may be a mobile phone supporting a Wi-Fi communications function, a tablet computer supporting a Wi-Fi communications function, a set-top box supporting a Wi-Fi communications function, a smart television supporting a Wi-Fi communications function, an intelligent wearable device supporting a Wi-Fi communications function, a vehicle-mounted communications device supporting a Wi-Fi communications function, a computer supporting a Wi-Fi communications function, or the like. Optionally, the station may support the 802.11be standard. The station may also support a plurality of wireless local area network (wireless local area network, WLAN) standards of the 802.11 family such as the 802.11be, 802.11ax, 802.1 1ac, 802.11n, 802.11g, 802.1 1b, and 802.11a.

The station may include a processor and a transceiver. The processor is configured to control and manage an action of the access point, and the transceiver is configured to receive or send information.

The access point in this application may be a high efficiency (high efficient, HE) STA or an extremely high throughput (extramely high throughput, EHT) STA, or may be a STA applicable to a future Wi-Fi standard.

For example, the access point and the station may be devices used in the Internet of vehicles, nodes or sensors in the Internet of things (IoT, internet of things), smart cameras, smart remote controls, and smart water meters in a smart home, and sensors in a smart city.

The access point and the station in embodiments of this application may also be collectively referred to as communications apparatuses. The communications apparatus may include a hardware structure and a software module, and the foregoing functions are implemented in a form of a hardware structure, a software module, or a combination of the hardware structure and the software module. A function in the foregoing functions may be implemented in a form of a hardware structure, a software module, or a combination of the hardware structure and the software module.

FIG. 1B is a schematic diagram of a structure of a communications apparatus according to an embodiment of this application. As shown in FIG. 1B, the communications apparatus 200 may include a processor 201 and a transceiver 205, and optionally further includes a memory 202.

The transceiver 205 may be referred to as a transceiver unit, a transceiver machine, a transceiver circuit, or the like, and is configured to implement a transceiver function. The transceiver 205 may include a receiver and a transmitter. The receiver may be referred to as a receiver, a receive circuit, or the like, and is configured to implement a receiving function. The transmitter may be referred to as a transmitter, a transmit circuit, or the like, and is configured to implement a sending function.

The memory 202 may store a computer program, software code, or instructions 204, where the computer program, the software code, or the instructions 204 may further be referred to as firmware. The processor 201 may control a MAC layer and a PHY layer by running a computer program, software code, or instructions 203 in the processor 201, or by invoking the computer program, the software code, or the instructions 204 stored in the memory 202, to implement a data transmission method provided in the following embodiments of this application. The processor 201 may be a central processing unit (central processing unit, CPU), and the memory 302 may be, for example, a read-only memory (read-only memory, ROM), or a random access memory (random access memory, RAM).

The processor 201 and the transceiver 205 described in this application may be implemented in an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like.

The communications apparatus 200 may further include an antenna 206. The modules included in the communications apparatus 200 are merely examples for description, and are not limited in this application.

As described above, the communications apparatus 200 described in the foregoing embodiment may be an access point or a station. However, the scope of the communications apparatus described in this application is not limited thereto, and the structure of the communications apparatus may not be limited to the structure in FIG. 1B. The communications apparatus may be an independent device or may be a part of a larger device. For example, the communications apparatus may be implemented in the following form:
(1) an independent integrated circuit (IC), a chip, a chip system, or a subsystem; (2) a set of one or more ICs, where optionally, the set of ICs may also include a storage component for storing data and instructions; (3) a module that can be embedded in another device; (4) a receiver, an intelligent terminal, a wireless device, a handheld device, a mobile unit, a vehicle-mounted device, a cloud device, an artificial intelligence device, or the like; or (5) others.

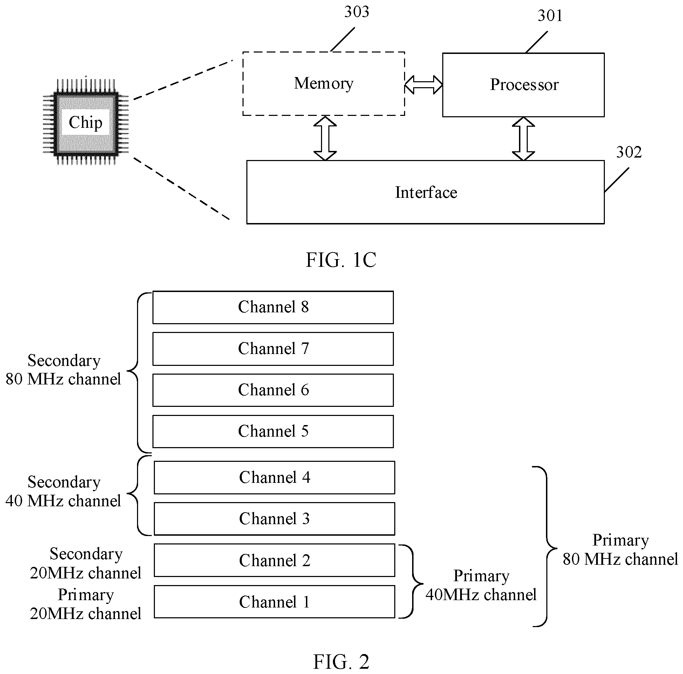

For the communications apparatus implemented in the form of the chip or the chip system, refer to a schematic diagram of a structure of a chip shown in FIG. 1C. The chip shown in FIG. 1C includes a processor 301 and an interface 302. There may be one or more processors 301, and there may be a plurality of interfaces 302. Optionally, the chip or the chip system may include a memory 303.

Embodiments of this application do not limit the protection scope and applicability of the claims. A person skilled in the art may adaptively change functions and deployments of elements in this application, or omit, replace, or add various processes or components as appropriate without departing from the scope of embodiments of this application.

### Embodiment 1

For channel allocation in a wireless local area network, FIG. 2 shows an example of allocation of a 160 MHz channel in the 802.11.

Channels of the entire wireless local area network are divided into a primary 20 MHz channel (or a primary channel for short, Primary 20 MHz, P20), a secondary 20 MHz channel (Secondary 20 MHz, S20), a secondary 40 MHz channel (S40), and a secondary 80 MHz channel (S80). In addition, correspondingly there are a primary 40 MHz channel (P40) and a primary 80 MHz channel (P80). Data rate of data transmission increases with a bandwidth (refer to Table 1). Therefore, in the next-generation standard, a larger bandwidth (for example, 240 MHz or 320 MHz) that is greater than 160 MHz is considered. A scenario to which the solutions in implementations of this application are applicable is a larger bandwidth scenario in the IEEE 802.11be or another standard.

Before the 802.11ax, only PPDU (PHY Protocol Data Unit, physical layer protocol data unit) transmission in a non-puncturing pattern is supported. To be specific, a condition for 20 MHz transmission is that the P20 is idle; a condition for 40 MHz transmission is that the P20 and the S20 are idle; a condition for 80 MHz transmission is that the P20, the S20, and the S40 are idle; and a condition for 160 MHz transmission is that the P20, the S20, the S40, and the S80 are idle. A condition for larger bandwidth transmission is that all channels in one bandwidth are determined to be idle and available through channel detection in an order of the P20, the S20, the S40, and the S80. If there is interference or a radar signal on some channels, a larger bandwidth cannot be used.

A preamble puncturing transmission method is introduced in the 802.11ax, so that the PPDU can still be transmitted when no preamble (and subsequent data) is transmitted on some 20 MHz channels. This method increases channel utilization when interference occurs on some channels. The 802.11ax defines the following preamble puncturing and non-puncturing bandwidth patterns of the PPDU:

**Table 1a Bandwidth indication field**

| Bandwidth field | Meaning |
|---|---|
| 0 | 20 MHz |
| 1 | 40 MHz |
| 2 | 80 MHz non-puncturing pattern (no puncturing) |
| 3 | 160 MHz or 80 MHz + 80 MHz non-puncturing pattern |
| 4 | 80 MHz puncturing pattern, in which only a secondary 20 MHz (secondary 20 MHz, S20) is punctured. |
| 5 | 80 MHz puncturing pattern, in which only one 20 MHz within a secondary 40 MHz (secondary 40 MHz, S40) is punctured. |
| 6 | 160 MHz puncturing pattern, in which only a secondary 20 MHz (secondary 20 MHz, S20) is punctured on a P80 (an 80 MHz within which a P20 is located). |
| 7 | 160 MHz puncturing pattern, in which a P40 exists, and at least one 20 MHz subchannel in a non-P40 MHz is punctured. |

A revised IEEE 802.11ax standard allows an access point (Access Point, AP) and a non-access-point station (non-AP Station, non-AP STA, STA) to enable, by using a target wake time (Target Wakeup Time, TWT) agreement mechanism, the STA to switch to another 20 MHz or 80 MHz channel in a service period (Service Period), to sense and obtain an AP service, which is referred to as subchannel selective transmission (Subchannel Selective Transmission, SST). The IEEE 802.11be may also introduce the SST mechanism to enable one or more STAs to park (park) on different channels . Further, in downlink multi-user transmission, a multi-segment preamble transmission mechanism is to be introduced in the 802.11be. In downlink multi-user transmission, for example, OFDMA, content of an EHT physical layer preamble (including a U-SIG (universal signaling) field and an EHT (extremely high throughput) field) transmitted on each 80 MHzfrequency segment is different. In large bandwidth (for example, 160 MHz, 240 MHz, and 320 MHz) transmission, different physical layer preamble fields U-SIG and EHT-SIG are used for each 80 MHz frequency segment, so that total physical layer signal fields are distributed to each 80 MHz for transmission. In this way, preamble transmission time can be saved, which may be understood as reducing overheads. In addition, a STA parks on an 80 MHz needs to receive only U-SIG and EHT-SIG corresponding to the 80 MHz frequency segment to obtain resource allocation information, for example, resource allocation information for OFDMA transmission.

It should be noted that a physical layer preamble of each EHT PPDU further includes a legacy preamble field (a legacy short training field (L-STF, legacy short training field), a legacy long training field (L-LTF, legacy long training field), a legacy signal field (L-SIG, legacy signaling field)), and a repeated signal field RL-SIG field, which are all located before an EHT preamble. Duplicate transmission is performed on both the legacy preamble field and the repeated signal field on each 20 MHz in a PPDU bandwidth (regardless of a rotation factor applied to each 20 MHz).

For uplink multi-user transmission, for example, uplink OFDMA, some issues are not considered, such as whether flexible frequency multi-segment transmission is performed, and how to support a low bandwidth station (for example, an 80 MHz station) in a large bandwidth (for example, 320 MHz) PPDU for transmission.

### Embodiment 1

In Embodiment 1 of this application, a channel bandwidth used to transmit an uplink PPDU in a wireless local area network is also divided into a plurality of frequency fragments, and several stations park on each frequency fragment. Specifically, the parking is a correspondence determined or known by a system, and may be semi-static. To be specific, a correspondence between a frequency fragment and one or more parked stations is configured and remains unchanged in a specific period of time. Alternatively, such correspondence may be dynamic, and an AP dynamically adjusts the correspondence according to a specific rule. In a more specific example, the frequency segment may include one or more basic units of the frequency segment. The frequency segment may be stipulated by a protocol or specified by the AP. For example, the frequency fragment is 80 MHz, or may be another bandwidth, for example, 160 MHz, 240 MHz, or 320 MHz. A specific process of configuring the parking correspondence is not required in the following embodiments, and therefore details are not described again. In embodiments of this application, the frequency segment may also be referred to as a frequency segment (frequency segment) or the like. It should be understood that the station parking (parking) on a frequency segment in this application may also be referred to as the station dwelling on a frequency segment, or the station located in or belonging to a frequency segment. A PPDU sent by the station or the AP includes sub-PPDUs in one or more frequency band segments, and sizes of the frequency band segments may be the same or different.

In an association phase or a phase after association, the station may report, to the AP, information about a channel that the station senses (for example, a specific 20 MHz), an operating bandwidth of the station (or a current operating bandwidth range, which is a bandwidth on which the station can currently receive and send information), and a supported bandwidth of the station. The frequency segment on which the station parks includes a frequency segment on which a 20 MHz channel sensed by the station is located. The channel sensed by the station may be any one or more channels in the operating bandwidth, or may be one or more channels selected from a sensed channel set specified by the AP. The supported bandwidth of the station usually indicates an RX capability of the station, and is a maximum communication bandwidth that can be supported by the station. The operating bandwidth of the station is usually less than or equal to the supported bandwidth of the station, and the frequency segment on which the channel sensed by the station is located is usually less than or equal to the operating bandwidth of the station.

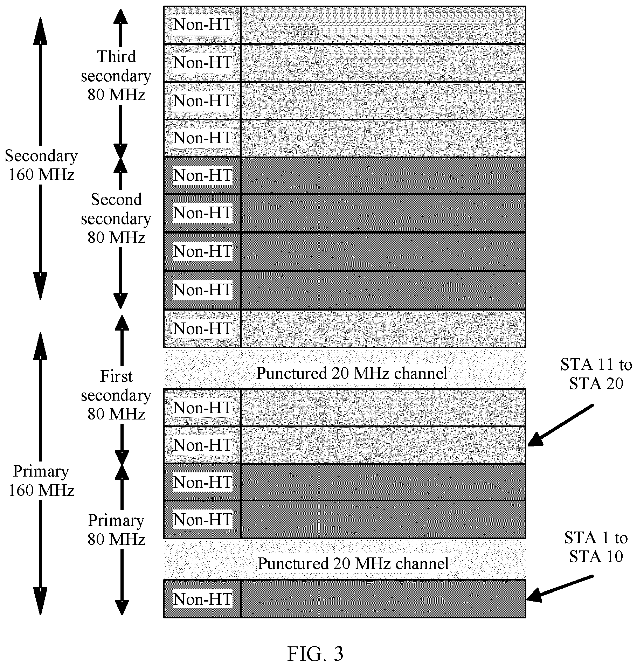

FIG. 3 is a simple schematic diagram of a frequency segment and a station parked on the frequency segment. For example, a frequency segment (or a frequency segment granularity/minimum frequency segment) is 80 MHz, and a sequence number of each 20 MHz is counted from bottom to top (the sequence numbers may increase from lower frequency to higher frequency, or may increase from higher frequency to lower frequency; the following uses an example from lower frequency to higher frequency, where 20 MHz may be punctured; and details are not described again). In an example in FIG. 3, a station 1 to a station 5 sense a first 20 MHz, and an operating bandwidth is a primary 80 MHz; a station 6 to a station 10 sense the first 20 MHz, and an operating bandwidth is a primary 160 MHz; and a station 11 to a station 20 sense a fifth 20 MHz, and an operating bandwidth is a first secondary 80 MHz. The frequency segment on which the station parks is a frequency segment on which a 20 MHz channel sensed by the station is located. A size or range of the frequency segment may be determined by a frequency segment selected when the AP sends the PPDU. For example, a bandwidth of a PPDU to be sent by a transmit AP is 320 MHz, and there are four frequency segments: a primary 80 MHz, a first secondary 80 MHz, a second secondary 80 MHz, and a third secondary 80 MHz. In this case, a frequency segment on which the station 1 to the station 5 park is the primary 80 MHz, a frequency segment on which the station 6 to the station 10 park is the primary 80 MHz, and a frequency segment on which the station 11 to the station 20 park is the first secondary 80 MHz. For another example, a bandwidth of a PPDU to be sent by a transmit end is 320 MHz, and there are three frequency segments: primary 160 MHz, second secondary 80 MHz, and third secondary 80 MHz. In this case, a frequency segment on which the station 1 to the station 5 park is the primary 160 MHz, a frequency segment on which the station 6 to the station 10 park is the primary 160 MHz, and a frequency segment on which the station 11 to the station 20 park is the primary 160 MHz. It can be learned that the frequency segment is a PPDU bandwidth division method in a frequency domain. One or more adjacent frequency segments form an entire PPDU bandwidth. Certainly, the frequency segment or the bandwidth may include a punctured 20 MHz.

A frequency segment determined by the AP may include a plurality of frequency segments of different sizes or a same size, or this is not limited. Certainly, in a simplified method, a standard may specify a frequency segment granularity, or a minimum frequency segment. By default, a frequency segment mode of a PPDU bandwidth is that the PPDU bandwidth is divided into minimum frequency segments, where a size of the minimum frequency segment is, for example, 80 MHz. It may be understood that when determining the frequency segment, the AP may consider information about a channel sensed by each associated station, and may further consider information about an operating bandwidth of the station, so that the determined frequency segment meets a service requirement as much as possible. Correspondingly, the station may flexibly adjust, as much as possible based on the service requirement, the channel sensed by the station, and flexibly adjust the operating bandwidth of the station, to save energy or improve transmission efficiency.

In an example, a method for obtaining/updating the channel to be sensed by the station is provided.

Specifically, the AP may send a recommended to-be-sensed channel set in a management frame or another frame, and the station feeds back a selected to-be-sensed channel based on the received sensed channel set. The to-be-sensed channel set is carried in the management frame sent by the AP, for example, a beacon frame. When sending the PPDU, the AP needs to send information on at least the to-be-sensed channel selected by the station. Therefore, the to-be-sensed channel cannot be punctured. Certainly, a negotiation manner may also be used. For example, the station sends a request frame, where the request frame carries the selected to-be-sensed channel; and the AP replies with a response frame, where the response frame carries a status, and the status includes rejected, received, and the like. If the status is rejected, one or more recommended to-be-sensed channels may be further carried. In another example, a method for notifying/updating the operating bandwidth of the station is provided, including sending an operating bandwidth indication of the station. Specifically, a possible operating bandwidth of the station includes one or more of 20 MHz, 80 MHz, 160 MHz, 240 MHz, and 320 MHz. The operating bandwidth of the station may be indicated by a bitmap or an index. Details are as follows.

Manner 1: A bitmap has a fixed size, and each bit in the bitmap corresponds to one 20 MHz. For example, a quantity of bits corresponds to a quantity of 20 MHz included in a maximum bandwidth, and a maximum bandwidth of a BSS is 320 MHz. In this case, the bitmap size is 16 bits. Each bit in the bitmap indicates whether the 20 MHz is within an operating bandwidth range. For example, a first value (for example, 1) indicates that the corresponding 20 MHz is within the operating bandwidth range, and a second value (for example, 0) indicates that the corresponding 20 MHz is outside the operating bandwidth range. For example, a bitmap 1111 0000 0000 0000 indicates that the operating bandwidth of the station is a first 80 MHz. For another example, a bitmap 1000 0000 0000 0000 indicates that the operating bandwidth is a first 20 MHz. In addition, the bitmap size may also change with a BSS bandwidth. For example, if the BSS bandwidth is 80 MHz, a quantity of bits in the bitmap is 4. For another example, if the BSS bandwidth is 160 MHz, a quantity of bits in the bitmap is 8.

Manner 2: A bitmap has a fixed size, and each bit in the bitmap corresponds to one 80 MHz. For example, a maximum bandwidth supported by an EHT PPDU is 320 MHz. In this case, a bitmap length is 4 bits. Each bit in the bitmap indicates whether the corresponding 80 MHz is within an operating bandwidth range. For example, a first value (for example, 1) indicates that the corresponding 80 MHz is within the operating bandwidth range, and a second value (for example, 0) indicates that the corresponding 80 MHz is outside the operating bandwidth range. For example, a bitmap 1000 indicates that the operating bandwidth of the station is a first 80 MHz. For another example, a bitmap 1100 indicates that the operating bandwidth of the station is a first 160 MHz. For another example, a special bitmap 0000 indicates that the operating bandwidth of the station is a sensed 20 MHz. In addition, the bitmap size may also change with a BSS bandwidth. For example, if the BSS bandwidth is 80 MHz, a quantity of bits in the bitmap is 1. For another example, if the BSS bandwidth is 160 MHz, a quantity of bits in the bitmap is 2.

Manner 3: The operating bandwidth of the station is indicated by an index.

Refer to Table 2. The operating bandwidth of the station may be indicated by 3 or 4 bits. The operating bandwidth of the station includes:
one or more of a 20 MHz, a primary 80 MHz, a first secondary 80 MHz, a second secondary 80 MHz, a third secondary 80 MHz, a primary 160 MHz, a secondary 160 MHz, a primary 240 MHz, a secondary 240 MHz, 320 MHz, and the like. Some or all of 8 to 16 values of 3 or 4 bits respectively indicate one or more of the operating bandwidths, and other values may be reserved.

**Table 2 Indication of an operating bandwidth of a station**

| Bandwidth field | Meaning |
|---|---|
| 0 | 20 MHz |
| 1 | Primary 80 MHz |
| 2 | First 80 MHz |
| 3 | Second secondary 80 MHz |
| 4 | Third secondary 80 MHz |
| 5 | Primary 160 MHz |
| 6 | Secondary 160 MHz |
| 7 | Primary 240 MHz |
| 8 | Secondary 240 MHz |
| 9 | 320 MHz |

The 20 MHz channel sensed by the STA may be located on any channel in the BSS bandwidth, so that AP can improve transmission efficiency of sending a trigger frame for uplink scheduling. In other words, content carried in the trigger frame transmitted on each frequency segment may be different. In addition, STAs with different operating bandwidths are distributed on different frequency segments. For example, a station with an operating bandwidth of 80 MHz can allocate uplink transmission resources in frequency resources of an entire bandwidth to different STAs more evenly. In this way, not all STAs with an operating bandwidth of 80 MHz park on the primary 80 MHz, otherwise frequency resources on the primary 80 MHz are insufficient and frequency resources on other 80 MHz are wasted.

Generally, in uplink transmission, all STAs park on a P20 to sense and receive scheduling information (for example, the trigger frame) for uplink transmission. A rule of sending data by the transmit end is as follows: When the P20 is available for transmission, the transmit end further analyzes whether another channel is available for transmission. For example, if the trigger frame usually uses a non-HT format, a physical layer preamble of the trigger frame needs to transmit same content in each 20 MHz, and the trigger frame also needs to transmit same content in each 20 MHz. In this embodiment, the station may change a to-be-sensed channel and/or an operating bandwidth based on a channel condition, power saving, or another factor, and notify the AP of the change. Compared with a solution in which the station parks only on the P20 to sense and receive the scheduling information, the foregoing flexible channel sensing solution, or referred to as a parking solution allows different trigger frames to be sent on different frequency segments (for example, the 80 MHz). In other words, total content of the trigger frame is distributed to different 80 MHz, so that overheads of the trigger frame are reduced.

In addition to uplink scheduling, the foregoing flexible parking method can be applied to downlink transmission. A downlink transmission solution is not described in detail in this application.

### Embodiment 2

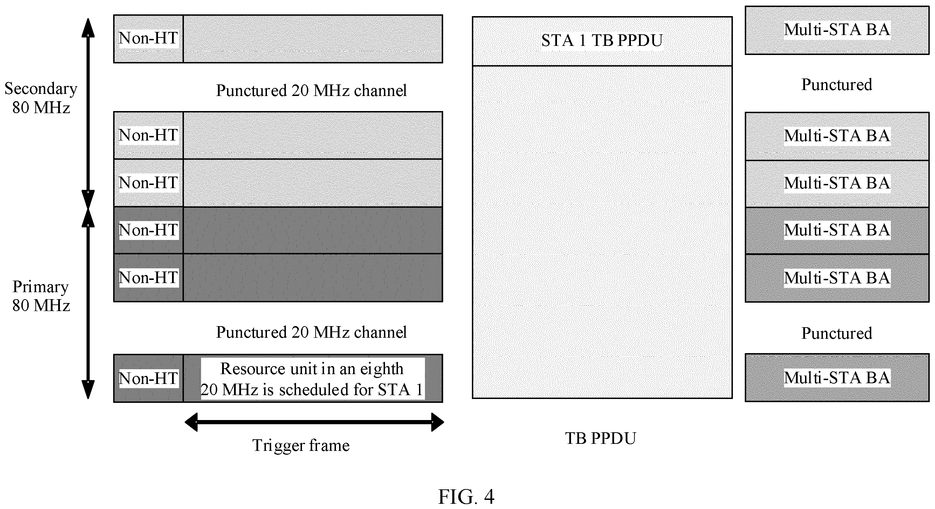

Refer to FIG. 4. A method for sending or receiving a trigger frame is provided. The method is based on a frequency segment, or is referred to as a method for uplink scheduling on a frequency segment.

101: An AP generates a PPDU. The PPDU includes one or more trigger frames. Each trigger frame corresponds to one frequency segment, and each trigger frame is used to schedule at least one or more stations parking on the corresponding frequency segment, so that the station sends an uplink PPDU. In other words, each trigger frame is at least used by one or more stations on the frequency segment on which the trigger frame is located to transmit the uplink PPDU (the one or more stations on the frequency segment on which the trigger frame is located may also be understood as that channels sensed by the stations are on the frequency segment on which the trigger frame is located). The frequency segment on which the station parks is a frequency segment on which a 20 MHz channel sensed by the station is located. A size or range of the frequency segment may be determined by a frequency segment selected when the AP sends the PPDU. The AP determines one or more frequency segments included in the PPDU to be sent and a size of the frequency segment based on a factor such as a sensed channel of one or more to-be-scheduled stations. Alternatively, the AP may also determine one or more frequency segments included in the PPDU to be sent and a size of the frequency segment based on a factor such as an operating bandwidth of one or more to-be-scheduled stations. Refer to Embodiment 1. Details are not described herein again.

Specifically, the AP obtains information about the station parking on each frequency segment, and generates one or more trigger frames with reference to a frequency domain resource and an obtained uplink service requirement of the station. The trigger frame includes information about the to-be-scheduled station and a frequency domain resource allocated to the station.

102: The AP sends the one or more trigger frames in the PPDU, where each trigger frame is carried in the corresponding frequency segment. A specific manner is as follows: The trigger frame is transmitted on each 20 MHz of the corresponding frequency segment. In another manner, the trigger frame is transmitted on an entire corresponding frequency segment or a resource unit on the frequency segment, for example, a largest resource unit.

103: The station sends the uplink PPDU based on a received trigger frame. Generally, the uplink PPDU may be an uplink multi-user PPDU. Certainly, in a special scenario, the foregoing method may be used to schedule only one station for uplink transmission.

The method for sending the uplink multi-user PPDU in step 103 may adopt a MU-MIMO technology and/or an OFMDA technology. The uplink multi-user PPDU is briefly referred to as trigger based PPDU (trigger based PPDU, TB PPDU).

In the implementations of steps 101 to 103, different trigger frames may have different content. In this way, content of all trigger frames may be distributed to different frequency segments, saving resources for sending the trigger frames. Further, in a preferred implementation, the trigger frame may schedule scheduling information of only one or more stations parking on the corresponding frequency segment. In other words, the scheduling information excludes scheduling information of any station parking on another frequency segment. In this way, the content of all trigger frames can be distributed to a maximum extent, and resources for sending the trigger frames can be saved to a maximum extent.

The trigger frame generated in step 101 may be carried in a PPDU in OFDMA format (which may be referred to as an EHT MU PPDU or another name), or in a non-HT PPDU (that is, a PPDU with a preamble including only a legacy preamble), or carried in a single-user PPDU that complies with a standard such as 11n, 11ac, 11ax, or 11be. Alternatively, the trigger frame may be transmitted together with another MAC frame, for example, a data frame or a control frame.

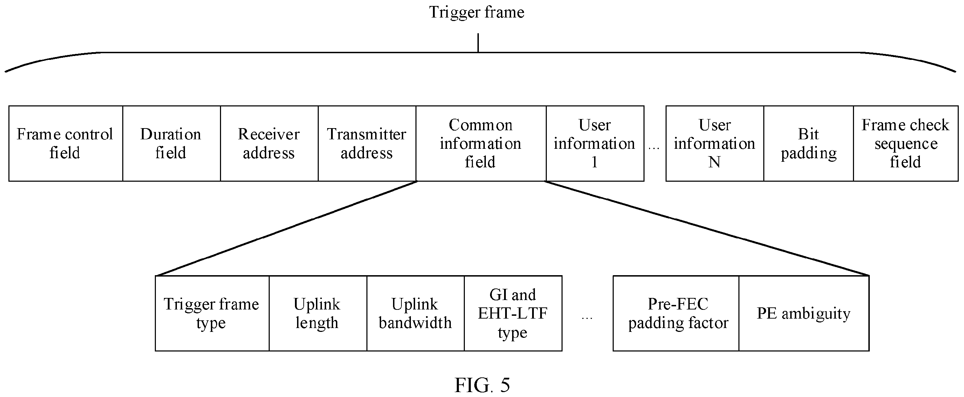

FIG. 5 shows an example of a structure of the trigger frame. The trigger frame may include one or any combination of the following fields (not limited to locations of fields shown in FIG. 5): a frame control field, a duration field, a receive address field, a transmit address field, a common information field, a plurality of user information fields, a bit padding field, or a frame check sequence field.

The common information field indicates a common parameter of uplink multi-user transmission. The user information field indicates a parameter for a single station to transmit an uplink PPDU, for example, a parameter including a resource unit indicated by a resource allocation field. For example, the common information field includes one or any combination of the following fields (not limited to locations of fields shown in FIG. 5): a trigger type field (Trigger Type), an uplink length field (UL Length), a more trigger frame field (More TF), a carrier sense required field (CS Required), an uplink bandwidth field (UL BW), a GI (guard interval, guard interval) and EHT-LTF type field, a pre-FEC padding factor field, a PE ambiguity field, and a AP TX power (AP TX Power) field.

The uplink length field (UL bandwidth) indicates a length of an L-SIG field in a legacy preamble of an uplink TB PPDU scheduled by the trigger frame.

The more trigger frame field (More TF) indicates whether there is still a trigger frame to be sent.

The GI (guard interval, guard interval) and EHT-LTF type field indicates a length of a GI and a type of an EHT-LTF.

The pre-FEC padding factor field and the PE ambiguity field jointly indicate a physical layer padding length of an EHT PPDU, including a post-FEC padding length and a PE field length (FEC: Forward Error Correction, forward error correction; PE: packet extension, packet extension).

The TX power field indicates a TX power in the unit of dBm of a station. A value of the power is generally normalized to 20 MHz.

Optionally, common fields of the trigger frame may further include a trigger type dependent common information field. For example, in a basic trigger type, the trigger type dependent common information field includes fields such as an MPDU spacing factor, a TID (traffic identifier) aggregation limit, and a preferred AC (access category).

Optionally, the common fields of the trigger frame may further include information such as uplink space-time block coding or uplink spatial multiplexing.

Preferably, different trigger frames in a bandwidth of a PPDU carrying the trigger frame may further carry a puncturing information field of the PPDU bandwidth. For example, a punctured bitmap indicates which 20 MHz is punctured in the bandwidth. Punctured means that content such as a physical layer preamble and a data field (including a MAC frame) is not transmitted in a corresponding 20 MHz of the PPDU. The punctured bitmap may have a fixed quantity of bits. For example, the quantity of bits is the same as a quantity of 20 MHz included in a maximum bandwidth of the PPDU. For example, 320 MHz includes sixteen 20 MHz. The quantity of bits of the punctured bitmap change with the PPDU bandwidth. For example, when the PPDU bandwidth is 80 MHz, the quantity of bits of the punctured bitmap is 4; when the PPDU bandwidth is 160 MHz, the quantity of bits of the punctured bitmap is 8. After the station receives the trigger frame, when sending the uplink PPDU, the station may correspondingly transmit, based on the puncturing information field of the PPDU bandwidth, a U-SIG in a physical layer preamble on a frequency segment corresponding to the station. The U-SIG includes puncturing information on the frequency segment.

In another manner, the puncturing information field may further indicate a possible puncturing pattern. An index value in Table 3 indicates a puncturing pattern. Possible puncturing patterns are shown in the following table.

**Table 3 Puncturing pattern**

| Pattern number | Puncturing pattern (each bit in the bitmap corresponds to one 20 MHz in a bandwidth; bits from left to right may correspond to 20 MHz from higher frequency to lower frequency, or from lower frequency to higher frequency in the bandwidth. A first value, for example, 1, indicates that a corresponding 20 MHz exists, and a second value, for example, 0, indicates that a corresponding 20 MHz is punctured.) |
|---|---|
| 1 | 80 MHz bandwidth, 0 1 1 1 |
| 2 | 80 MHz bandwidth, 1 0 1 1 |
| 3 | 80 MHz bandwidth, 1 1 0 1 |
| 4 | 80 MHz bandwidth, 1 1 1 0 |
| 5 | 160 MHz bandwidth, 0 0 1 1 1 1 1 1 |
| 6 | 160 MHz bandwidth, 1 1 0 0 1 1 1 1 |
| 7 | 160 MHz bandwidth, 1 1 1 1 0 0 1 1 |
| 8 | 160 MHz bandwidth, 1 1 1 1 1 1 0 0 |
| 9 | 160 MHz bandwidth, 0 1 1 1 1 1 1 1 |
| 10 | 160 MHz bandwidth, 1 0 1 1 1 1 1 1 |
| 11 | 160 MHz bandwidth, 1 1 0 1 1 1 1 1 |
| 12 | 160 MHz bandwidth, 1 1 1 0 1 1 1 1 |
| 13 | 160 MHz bandwidth, 1 1 1 1 0 1 1 1 |
| 14 | 160 MHz bandwidth, 1 1 1 1 1 0 1 1 |
| 15 | 160 MHz bandwidth, 1 1 1 1 1 1 0 1 |
| 16 | 160 MHz bandwidth, 1 1 1 1 1 1 1 0 |
| 17 | 240 MHz bandwidth, 0 0 0 0 1 1 1 1 1 1 1 1 |
| 18 | 240 MHz bandwidth, 1 1 1 1 0 0 0 0 1 1 1 1 |
| 19 | 240 MHz bandwidth, 1 1 1 1 1 1 1 1 0 0 0 0 |
| 20 | 240 MHz bandwidth, 0 0 1 1 1 1 1 1 1 1 1 1 |
| 21 | 240 MHz bandwidth, 1 1 0 0 1 1 1 1 1 1 1 1 |
| 22 | 240 MHz bandwidth, 1 1 1 1 0 0 1 1 1 1 1 1 |
| 23 | 240 MHz bandwidth, 1 1 1 1 1 1 0 0 1 1 1 1 |
| 24 | 240 MHz bandwidth, 1 1 1 1 1 1 1 1 0 0 1 1 |
| 25 | 240 MHz bandwidth, 1 1 1 1 1 1 1 1 1 1 0 0 |
| 26 | 320 MHz bandwidth, 0 0 0 0 1 1 1 1 1 1 1 1 1 1 1 1 |
| 27 | 320 MHz bandwidth, 1 1 1 1 0 0 0 0 1 1 1 1 1 1 1 1 |
| 28 | 320 MHz bandwidth, 1 1 1 1 1 1 1 1 0 0 0 0 1 1 1 1 |
| 29 | 320 MHz bandwidth, 1 1 1 1 1 1 1 1 1 1 1 1 0 0 0 0 |
| 30 | 320 MHz bandwidth, 0 0 1 1 1 1 1 1 1 1 1 1 1 1 1 1 |
| 31 | 320 MHz bandwidth, 1 1 0 0 1 1 1 1 1 1 1 1 1 1 1 1 |
| 32 | 320 MHz bandwidth, 1 1 1 1 0 0 1 1 1 1 1 1 1 1 1 1 |
| 33 | 320 MHz bandwidth, 1 1 1 1 1 1 0 0 1 1 1 1 1 1 1 1 |
| 34 | 320 MHz bandwidth, 1 1 1 1 1 1 1 1 0 0 1 1 1 1 1 1 |
| 35 | 320 MHz bandwidth, 1 1 1 1 1 1 1 1 1 1 0 0 1 1 1 1 |
| 36 | 320 MHz bandwidth, 1 1 1 1 1 1 1 1 1 1 1 1 0 0 1 1 |
| 37 | 320 MHz bandwidth, 1 1 1 1 1 1 1 1 1 1 1 1 1 1 0 0 |
| ... | ... |

Because a puncturing bandwidth pattern field only indicates limited puncturing patterns, the patterns included in Table 3 can be indicated by using only 6 bits. If more puncturing patterns are subsequently included, a length of the puncturing bandwidth pattern field may alternatively be 7 bits, 8 bits, 9 bits, or the like. Further optionally, a plurality of puncturing patterns indicated by the puncturing bandwidth pattern field change with a bandwidth, and the bandwidth is indicated by a bandwidth field in the trigger frame. Specifically, when a bandwidth is 20 MHz or 40 MHz, there is no puncturing pattern. In this case, the puncturing bandwidth pattern field may be 0 bits. When a bandwidth is 80 MHz, patterns indicated by the puncturing bandwidth pattern field include the patterns numbered 1 to 4, and 2 bits are required. When a bandwidth is 160 MHz, patterns indicated by the puncturing bandwidth pattern field include the patterns numbered 5 to 16, and 4 bits are required. When a bandwidth is 240 MHz, patterns indicated by the puncturing bandwidth pattern field include the patterns numbered 17 to 25, and 4 bits are required. When a bandwidth is 320 MHz, patterns indicated by the puncturing bandwidth pattern field include the patterns numbered 26 to 37, and 4 bits are required. A preferred manner is that a pattern indicated by the puncturing bandwidth pattern field changes with a bandwidth, but a length remains unchanged. In the foregoing example, a length of the puncturing bandwidth pattern field is a maximum quantity of bits required by all the foregoing bandwidths, that is, 4 bits. For example, when a bandwidth is 80 MHz, patterns indicated by the puncturing bandwidth pattern field include the patterns numbered 1 to 4, values 0 to 3 of a 4-bit puncturing bandwidth pattern field respectively indicate the patterns numbered 1 to 4, and other values are reserved.

In another manner, the puncturing information field may further carry a portion of puncturing information in the PPDU bandwidth. Based on a bandwidth size, the bitmap may include 2 bits, 3 bits, or 4 bits (or fixed 4 bits) to indicate a bandwidth at a granularity of 80 MHz. A first value (1) indicates that puncturing information corresponding to the 80 MHz is included, and a second value (0) indicates that puncturing information corresponding to the 80 MHz is not included. Puncturing information indication method of each 80 MHz frequency segment is the same as the puncturing information indication method in the U-SIG field in Embodiment 3. Details are not described herein again. The portion of puncturing information carried in the puncturing information field needs to include puncturing information of a frequency bandwidth occupied by an uplink physical layer preamble sent by a station that is scheduled by the trigger frame.

Optionally, a common field of the trigger frame may further carry information/a field indicating a bandwidth of a frequency segment on which the trigger frame is located.

In an example, the trigger frame excludes the information/field indicating the bandwidth of the frequency segment on which the trigger frame is located. The station receives the trigger frame based on only a default frequency segment (for example, a minimum frequency segment specified in a standard or a frequency segment granularity specified in a standard, for example, 80 MHz) in which a sensed channel is located. Preferably, the trigger frame may further include the information/field indicating the bandwidth of the frequency segment on which the trigger frame is located. The station may receive the trigger frame based on an indicated frequency segment, for example, the station may combine trigger frames on the frequency segment to improve robustness. In this case, the foregoing indication about the UL bandwidth of the entire uplink multi-user PPDU may be omitted. Certainly, the trigger frame may further include a UL bandwidth and information/a field indicating a bandwidth of a frequency segment on which an uplink PPDU of a station scheduled in the trigger frame is located.

Preferably, a station information field of the trigger frame may further carry information/a field indicating a bandwidth of a frequency segment on which a common physical layer preamble of the uplink PPDU of the station scheduled in the trigger frame is located. Certainly, the bandwidth of the frequency segment on which the common physical layer preamble of the uplink PPDU is located needs to be in an operating bandwidth of the station sending the uplink PPDU. Alternatively, the information about the bandwidth of the frequency segment on which the common physical layer preamble of the uplink PPDU is located may not be carried.

The bandwidth of the frequency segment may be 80 MHz, 160 MHz, 320 MHz, or the like. Optionally, the bandwidth of the frequency segment further includes 240 MHz. In this embodiment of the present invention, a frequency segment of 80 MHz is used as an example. For example, it is mentioned that trigger frames/acknowledgement frames/U-SIG fields of uplink common physical layer preambles that are transmitted on different 80 MHz have different content, and a trigger frame/acknowledgement frame/U-SIG field of an uplink common physical layer preamble that are transmitted on each 20 MHz of an 80 MHz have same content. There may be further frequency segments of different sizes in the same PPDU. For example, a 320 MHz PPDU includes one 160 MHz segment and two 80 MHz segments.

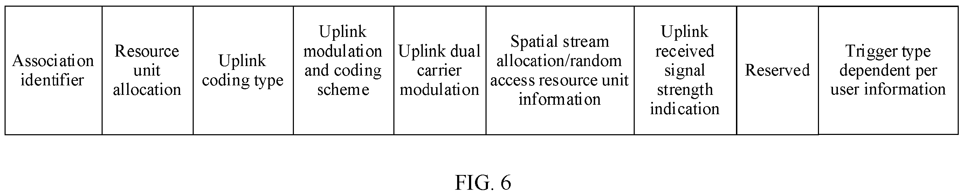

FIG. 6 is a simple schematic diagram of a structure of a user information field. The user information field may include one or any combination of the following fields (not limited to locations of fields shown in FIG. 6): an association identifier field, a resource unit allocation field, an uplink coding type field, an uplink modulation and coding scheme field, an uplink dual carrier modulation field, a spatial stream allocation or random access resource unit information field, an uplink received signal strength indication field, and a reserved field, and one or more of a plurality of trigger type dependent user information fields.

Specifically, a non-HT PPDU is used as an example. If a bandwidth of the PPDU carrying a trigger frame is greater than a frequency segment granularity (for example, 80 MHz), a physical layer preamble (including only a legacy preamble) of the PPDU is transmitted in the PPDU bandwidth, usually in the unit of 20 MHz, and content of the physical layer preamble carried in each 20 MHz in the PPDU bandwidth is the same. However, the trigger frame is transmitted in the unit of frequency segment granularity. In other words, trigger frames carried on different frequency segments are mutually independent and separately transmitted in frequency domain. In other words, content of trigger frames transmitted on different frequency segments may be different, but content of trigger frames transmitted in a plurality of 80 MHz may be the same. One frequency segment may include one or more frequency segment granularities.

At least a portion of the PPDU bandwidth falls in an operating bandwidth range of a station. For example, the PPDU bandwidth includes a 20 MHz sensed by the station. Refer to FIG. 5 or FIG. 6. In a specific example, the trigger frame is sent in a non-HT format. The non-HT format means that the physical layer preamble of the PPDU includes only the legacy preamble. The legacy preamble is transmitted in each 20 MHz in the PPDU bandwidth, and content of physical layer preambles on all 20 MHz is the same. Content of trigger frames transmitted in different 80 MHz is different, but content of a trigger frame transmitted in each 20 MHz within one 80 MHz is the same.

For example, station fields carried in a trigger frame sent in each 20 MHz within a primary 80 MHz are station information fields of a station 1 and a station 6, and station information fields of a station 11 to a station 14 are carried in a trigger frame sent in each 20 MHz within a secondary 80 MHz. In this way, the trigger frame transmitted in each 20 MHz does not need to carry information fields of all stations to be scheduled in a 160 MHz transmission bandwidth of the PPDU in which the trigger frame is located, that is, station information fields of the station 1, the station 6, and the station 11 to the station 14. This can reduce overheads.

It should be noted that trigger frames in different 80 MHz carry different station information fields. However, different trigger frames in different segments in a bandwidth need to trigger one entire uplink multi-user PPDU, instead of different uplink multi-user PPDUs in a plurality of 80 MHz segments. Therefore, different trigger frames in different segments need to be aligned, to help send the entire uplink multi-user PPDU. To be specific, for the entire uplink multi-user PPDU formed by uplink PPDUs separately sent by a plurality of scheduled stations, sending time of the uplink PPDUs needs to be aligned, including start time and end time. Different trigger frames on different segments need to be aligned, and the uplink PPDUs are sent at a specific interval (a fixed value, for example, a SIFS) after the trigger frame is received, so that the start time of the uplink PPDUs is aligned.

In a specific example, station information fields carried in trigger frames in different 80 MHz (herein, a frequency segment of 80 MHz is used as an example) may be different. As a result, lengths of information parts (excluding padding parts) of trigger frames transmitted in different 80 MHz may be different. However, in this embodiment, it is recommended that trigger frames transmitted in each 80 MHz frequency segment have a same length. Specifically, the trigger frames transmitted in each 80 MHz frequency segment may be aligned by using a padding (padding) method.

The following methods of aligning the trigger frames by padding are provided.

Method 1: A dummy (dummy) station information field is included or set at any location in a trigger frame with a short information part (a part that indicates scheduling information), so that the trigger frames transmitted in each 80 MHz frequency segment have the same length. Specifically, a length of the dummy station information field is the same as that of a station information field specified in the standard, but special setting is used to prevent the dummy station information field from being misread as the station information field by a receive end. For example, a value of an AID field in the dummy station information field is a special value, or a value of a resource allocation indication field in the dummy station information field is a special value, for example, 2047. A value other than the foregoing special value in the dummy station information field may be any information, or may be simplified as bits of all 0s or all 1s. In this alignment manner, the dummy station information field may be located between real station information fields, so that alignment flexibility can be improved.

Method 2: A first dummy station information field is appended to a tail of a trigger frame with a short information part. All 0s, all 1s, or other padding information is padded to locations following the first dummy station information field, so that the trigger frames transmitted in each 80 MHz frequency segment have the same length.

Method 3: A special AID identifier, for example, 2047, is appended to a tail of a trigger frame with a short information part (immediately after an information field of a last scheduled station). All 0s, all 1s, or other padding information is padded to locations following the first dummy station information field, so that the trigger frames transmitted in each 80 MHz frequency segment have the same length.

Method 4: An MPDU delimiter is included in a trigger frame with a short information part, so that the trigger frames transmitted in each 80 MHz frequency segment have the same length.

In a specific example, parameter fields, such as GI and EHT-LTF type fields, PE-related parameters (including pre-FEC padding factor fields and PE ambiguity fields), quantity of EHT-LTF symbols fields, or uplink length fields, that are carried in common fields of different trigger frames in the PPDU bandwidth need to have a same value. In this way, uplink OFDMA PPDUs transmitted in frequency segments are aligned, including end time and the EHT-LTF field.

A frequency segment of 80 MHz is used as an example. The uplink PPDU length fields included in trigger frames on different frequency segments have a same value, so that time of transmitting the uplink PPDUs by stations is the same. In addition, transmission start time of the uplink PPDUs is the same because the trigger frames transmitted in different segments are aligned, therefore, transmission end time of the uplink PPDUs is aligned. The quantity of uplink EHT-LTF symbols fields included in different trigger frames have a same value, so that quantities of OFDM symbols of EHT-LTFs of the uplink PPDUs of all stations are the same. The GI and EHT-LTF type fields included in different trigger frames have a same value, so that lengths of single OFDM symbols of the EHT-LTFs of the uplink PPDUs transmitted by stations are the same (the length of the OFDM symbol herein includes a GI length, which is the same in the following, and details are not described again). In addition, lengths of single OFDM symbols included in data fields of the uplink PPDUs transmitted by stations may also be the same. The pre-FEC padding factor fields and the PE ambiguity fields have a same value, so that physical layer padding lengths of the uplink PPDUs of all stations may be the same. A protocol specifies that a length of an OFDM symbol without GI is 12.8 µs, and the GI and EHT-LTF type fields have the same value, therefore, GI lengths of the OFDM symbols in the data fields may be the same. According to the foregoing solution, alignment is performed on uplink PPDU duration, EHT symbol fields, and end time of the uplink PPDUs, so that an AP sends an Acknowledgement frame of the uplink PPDU.

The alignment herein means that start time alignment and/or end time alignment. The end time alignment means that the end time is the same or a difference between the end time is within a specified interval range, where the specified interval range is stipulated by a protocol or in another manner. The start time alignment means that the start time is the same or a difference between the start time is within a specified interval. Meanings of alignment mentioned elsewhere in the present invention is not described again.

The resource allocation indication field in the station information field of the trigger frame may allocate one or more resource units to the station to transmit uplink frames. The 802.11ax protocol lists resource unit indexes in an 80 MHz bandwidth, a 40 MHz bandwidth, and a 20 MHz bandwidth. The resource unit indexes form a 7-bit table. Each resource unit index corresponds to one resource unit, including a 26-tone resource unit, 52-tone resource unit, 106-tone resource unit, 242-tone resource unit (a maximum resource unit in the 20 MHz bandwidth), 484-tone resource unit (a maximum resource unit in the 40 MHz bandwidth), and 996-tone resource unit (a maximum resource unit in the 80 MHz bandwidth). Additional 1-bit and 7-bit resource unit indexes in the 80 MHz bandwidth are added to indicate resource units in a 160 MHz bandwidth. The additional 1 bit indicates whether the resource unit is a resource unit in a primary 80 MHz or in a secondary 80 MHz. For a table of 7-bit resource unit allocation in 80 MHz, refer to the 802.1 1ax protocol. As shown in the following Table 4, RU sequence numbers 0 to 36 are indexes of 26-tone resource units in the 80 MHz bandwidth, RU sequence numbers 37 to 52 are indexes of 52-tone resource units in the 80 MHz bandwidth, RU sequence numbers 53 to 60 are indexes of 106-tone resource units in the 80 MHz bandwidth, RU sequence numbers 61 to 64 are indexes of 242-tone resource units in the 80 MHz bandwidth, RU sequence numbers 65 to 66 are indexes of 484-tone resource units in the 80 MHz bandwidth, and RU sequence number 67 is an index of a 996-tone resource unit in the 80 MHz bandwidth. Description of the 26-tone resource units RU1 to RU37, description of the 52-tone resource units RU1 to RU16, description of the 106-tone resource units RU1 to RU8, description of the 242-tone resource units RU1 to RU4, description of the 484-tone resource units RU1 to RU2, and description of the 996-tone resource unit R1 are recorded in the 802.11ax protocol. Details are not described herein again.

**Table 4 7-bit single resource unit allocation**

| Value | UL BW subfield indicates | RU tone size | Description |
|---|---|---|---|
| 0-8 | 20 MHz/40 MHz/80 MHz/80+80 MHz or 160 MHz/240 MHz or 160+80 MHz/320 MHz or 160+160 MHz | 26-tone | RU 1 to RU 9 respectively |
| 9-17 | 40 MHz/80 MHz/80+80 MHz or 160 MHz/240 MHz or 160+80 MHz/320 MHz or 160+160 MHz | | RU 10 to RU 18 respectively |
| 18-36 | 80 MHz/80+80 MHz or 160 MHz/240 MHz or 160+80 MHz/320 MHz or 160+160 MHz | | RU 19 to RU 37 respectively |
| 37-40 | 20 MHz/40 MHz/80 MHz/80+80 MHz or 160 MHz/240 MHz or 160+80 MHz/320 MHz or 160+160 MHz | 52-tone | RU 1 to RU 4 respectively |
| 41-44 | 40 MHz/80 MHz/80+80 MHz or 160 MHz/240 MHz or 160+80 MHz/320 MHz or 160+160 MHz | | RU 5 to RU 8 respectively |
| 45-52 | 80 MHz/80+80 MHz or 160 MHz/240 MHz or 160+80 MHz/320 MHz or 160+160 MHz | | RU 9 to RU 16 respectively |
| 53-54 | 20 MHz/40 MHz/80 MHz/80+80 MHz or 160 MHz/240 MHz or 160+80 MHz/320 MHz or 160+160 MHz | 106-tone | RU 1 to RU 2 respectively |
| 55-56 | 40 MHz/80 MHz/80+80 MHz or 160 MHz/240 MHz or 160+80 MHz/320 MHz or 160+160 MHz | | RU 3 to RU 4 respectively |
| 57-60 | 80 MHz/80+80 MHz or 160 MHz/240 MHz or 160+80 MHz/320 MHz or 160+160 MHz | | RU 5 to RU 8 respectively |
| 61 | 20 MHz/40 MHz/80 MHz/80+80 MHz or 160 MHz/240 MHz or 160+80 MHz/320 MHz or 160+160 MHz | 242-tone | RU 1 |
| 62 | 40 MHz/80 MHz/80+80 MHz or 160 MHz/240 MHz or 160+80 MHz/320 MHz or 160+160 MHz | | RU 2 |
| 63-64 | 80 MHz/80+80 MHz or 160 MHz/240 MHz or 160+80 MHz/320 MHz or 160+160 MHz | | RU 3 to RU 4 respectively |
| 65 | 40 MHz/80 MHz/80+80 MHz or 160 MHz/240 MHz or 160+80 MHz/320 MHz or 160+160 MHz | 484-tone | RU 1 |
| 66 | 80 MHz/80+80 MHz or 160 MHz/240 MHz or 160+80 MHz/320 MHz or 160+160 MHz | | RU 2 |
| 67 | 80 MHz/80+80 MHz or 160 MHz/240 MHz or 160+80 MHz/320 MHz or 160+160 MHz | 996-tone | RU 1 |
| 68 | 80+80 MHz or 160 MHz/240 MHz or 160+80 MHz/320 MHz or 160+160 MHz | 2x996-tone | The first Full bandwidth of 160 MHz or 80+80 MHz/the first 2*996 RU in 240 MHz or 160+80 MHz/320 MHz or 160+160 MHz |
| 69 | 240 MHz or 160+80 MHz/320 MHz or 160+160 MHz | 2x996-tone | The second 2* 996 RU in 240 MHz or 160+80 MHz/320 MHz or 160+160 MHz |
| 70 | 242MHz or 160+80 MHz/320 MHz or 160+160 MHz | 3x996-tone | Full bandwidth of 240 MHz or 160+80 MHz/the first 3*996 RU in 320 MHz or 160+160 MHz |
| 71 | 320 MHz or 160+160 MHz | 3x996-tone | The second 3*996 RU in 320 MHz or 160+160 MHz |
| 72 | 320 MHz or 160+160 MHz | 3x996-tone | The third 3*996 RU in 320 MHz or 160+160 MHz |
| 73 | 320 MHz or 160+160 MHz | 3x996-tone | The fourth 3*996 RU in 320 MHz or 160+160 MHz |
| 74 | 320 MHz or 160+160 MHz | 4x996-tone | |
| Otherwise | | | Reserved |
| NOTE 1 - These values are in binary form in PHY (for example, see Table 28-24 (RU Allocation subfield)) | | | |
| NOTE 2 - When UL BW subfield indicates 80+80 MHz or 160 MHz, the description indicates the RU index for the corresponding 80 MHz segment as indicated by B0 of the RU Allocation subfield. | | | |
| As listed above, there are two types of 240 MHz: 240 MHz and 160+80 MHz. Optionally, the 240 MHz may include 80+160 MHz (or include only 240 MHz and 80+160 MHz). | | | |

Refer to Table 4. To support the 320 MHz bandwidth, this implementation includes new resource units: a 2*996-tone resource unit, a 3*996-tone resource unit, and a 4*996-tone resource unit. Indices of the three resource units may be added to the table of 7-bit resource allocation in 80 MHz (referred to as an allocation table of a single resource unit).

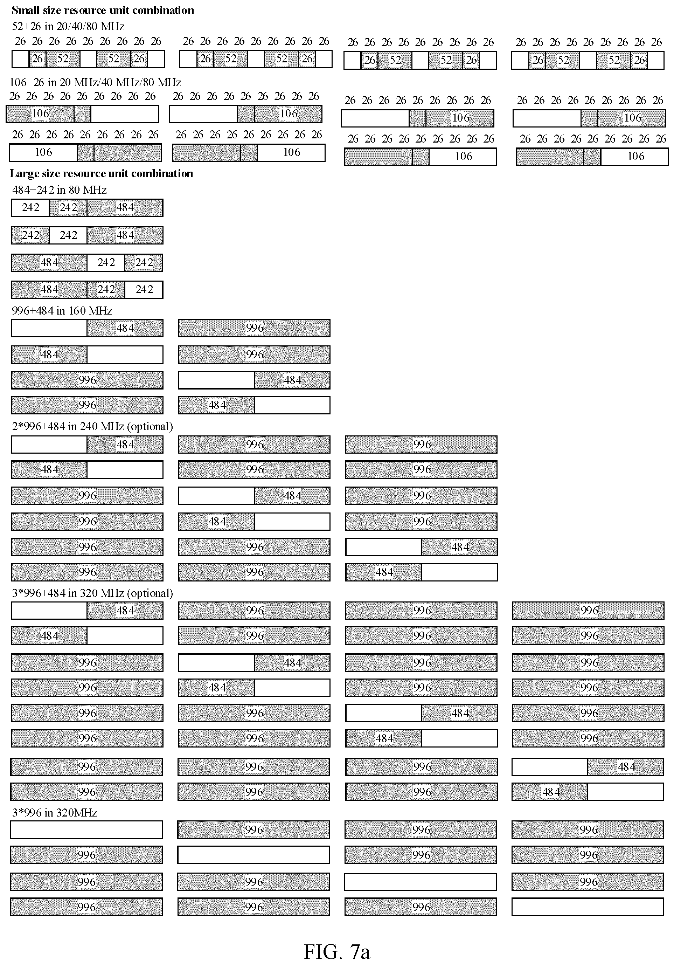

In another example, to support allocation of a plurality of resource units to a single station and reduce a signaling overhead, the following several resource unit indexes are specified. Refer to FIG. 7a. There are 16 types of allocation of a plurality of small size resource units, including 52+26 resource units and 106+26 resource units. For specific locations, refer to gray blocks in the upper part of FIG. 7a. There are 33 types of allocation of a plurality of large size resource unit, including 484+242 resource units, 996+484 resource units, and 2X996+484 resource units, 3X996+484 resource units, and 3X996 resource units. For specific locations, refer to gray blocks in the lower part of FIG. 7a. There are 49 types of allocation of a plurality of resource units in total. Certainly, there may also be a subset of the 49 types of allocation of the plurality of resource units, for example, the 2X996+484 resource units or the 3X996+484 resource units are excluded, or another allocation combination of a plurality of resource units is introduced.

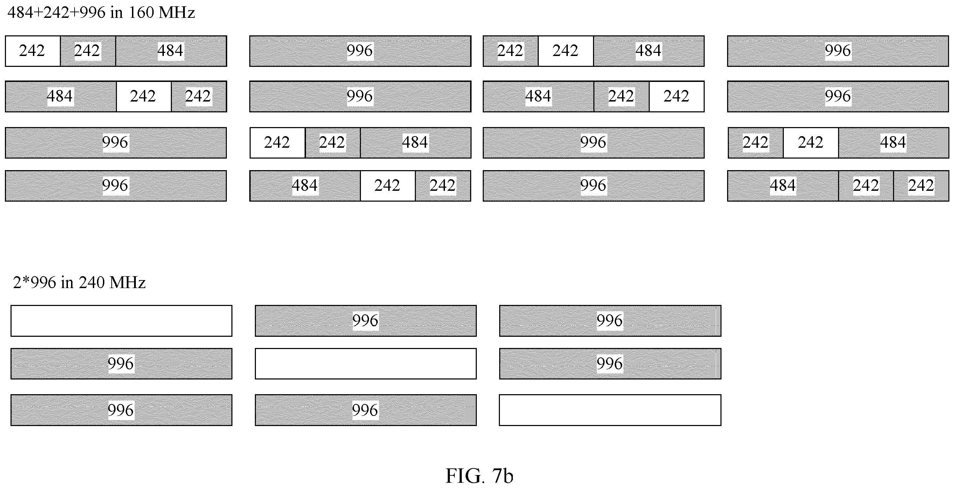

Specifically, a plurality of resource unit combinations shown in FIG. 7a and FIG. 7b (referred to as allocation tables of a plurality of resource units) may be respectively indicated based on two different 7 -bit table indexes. In an example, 1 bit indicates whether a resource unit allocated to a station is a single or more resource units, that is, whether allocation table indexes of single resource units or allocation table indexes of a plurality of resource units are used. Certainly, alternatively, a same table may be used to include content of the allocation table of single resource units and the allocation table of a plurality of resource units. A bit length required in the table depends on a quantity of entries of resource units to be indicated.

In another example, it is proposed that 2 bits indicate a specific 80 MHz in 320 MHz, sequence numbers may be from lower frequency to higher frequency, or may be from higher frequency to lower frequency, and indexes in the table may use 80 MHz as a reference (FIG. 7a or FIG. 7b). In other words, indexes of various resource units in an 80 MHz range are included.

One or more resource units allocated to the station based on a resource allocation indication field in a station information field of a trigger frame need to fall within an operating bandwidth range of the station.

### Embodiment 3

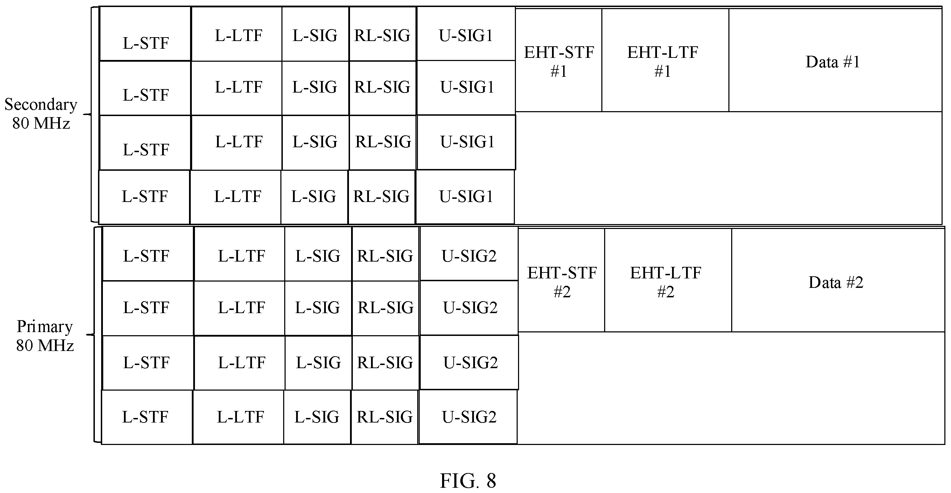

FIG. 8 is a frame structure of an uplink multi-user PPDU. A method for sending an uplink PPDU based on a frequency segment is provided.

201: A station sends the uplink PPDU based on a received trigger frame. A data part of the uplink PPDU is sent on a resource unit allocated to the station.

Specifically, the station may receive the trigger frame sent by an AP only on a frequency segment on which a sensed channel is located. If one station information field in the trigger frame matches an AID of the station, the station sends the uplink multi-user PPDU based on resource unit allocation information in the station information field that matches the AID of the station and a common field in the trigger frame. For example, the station transmits an uplink information frame of the station, for example, a data frame, in the resource unit indicated by a resource allocation indication field in the station information field. Specifically, the uplink PPDU sent by the station includes a common physical layer preamble, a post physical layer preamble (including an EHT-STF field and an EHT-LTF field), and a data part field (including a MAC frame, for example, the data frame). The common physical layer preamble may be transmitted in the unit of 20 MHz in a bandwidth of the uplink PPDU, and the post physical layer preamble and the data field are transmitted on the resource unit.

202: The AP receives the data part in the uplink PPDU sent by the station based on an allocated resource in the trigger frame.

Specifically, the AP receives the uplink information frame sent by the station on the resource unit indicated by the resource allocation indication field in the station information field in the trigger frame, and decodes the uplink information frame sent by the station based on a parameter such as, an MCS (modulation and coding scheme, modulation and coding scheme) in the station information field in the trigger frame. A specific resource unit allocation method is not described in detail in this application.

The method for transmitting an uplink common physical layer preamble by the station in step 201 includes the following several specific examples:

Method 1: The station may send the uplink common physical layer preamble only on each 20 MHz channel on a frequency segment on which the uplink PPDU of a scheduled station is located, based on information that is carried in the trigger frame and that is about a bandwidth of a frequency segment on which the common physical layer preamble of the uplink PPDU is located. Specifically, if a bandwidth of the uplink multi-user PPDU is greater than a frequency segment on which the station parks, the common physical layer preamble may not be sent on a 20 MHz channel outside the frequency segment. In this way, interference can be reduced, frequency domain multiplexing opportunities can be increased, and resource utilization efficiency can be improved. The frequency segment on which the uplink PPDU of the scheduled station is located needs to be within an operating bandwidth range of the station. It may be understood that the frequency segment on which the uplink PPDU is located may be different from a frequency segment on which the trigger frame is located. The frequency segment on which the trigger frame is located may be greater than the operating bandwidth of the station, but needs to include a 20 MHz sensed by the station. The station receives the trigger frame on a frequency segment on which the sensed 20 MHz in the operating bandwidth of the station is located, and sends the uplink common physical layer preamble on each 20 MHz channel on a frequency segment on which an uplink bandwidth indicated by the trigger frame is located.

The common physical layer preamble may include a legacy preamble (an L-STF, an L-LTF, and an L-SIG), a repeated signal field (RL-SIG), and a U-SIG field.

The communications system shown in FIG. 3 is used as an example. As shown in FIG. 7, it is assumed that DATA #1 is transmitted by a station 11 on a corresponding resource unit based on an indication in a received trigger frame. A common physical layer preamble of an uplink PPDU of the station 11 is transmitted on a frequency domain indicated by information/a field of a bandwidth of a frequency segment on which the common physical layer preamble of the uplink PPDU of the scheduling station is located and that is in the station information field in the trigger frame, for example, a first secondary 80MHz. Specifically, duplicate transmission (the duplicate transmission herein may include separately multiplying another 20 MHz within a non-first 20 MHz by a rotation factor, and details are not described herein) may be performed on each 20 MHz within the first secondary 80 MHz. In another example, it is assumed that DATA #1 is transmitted by a station 6 on a corresponding resource unit based on a received trigger frame, and a common physical layer preamble of the station 6 is transmitted on a frequency domain indicated by information/a field that indicates a bandwidth of a frequency segment in which the common physical layer preamble of the uplink PPDU scheduling the station is located and that is in the station information field in the trigger frame, for example, a primary 160 MHz. Specifically, transmission of the common physical layer preamble on each 20 MHz within an 80 MHz is duplicate transmission. U-SIGs of common physical layer preambles that are transmitted on different 80 MHz may be different, for example, the U-SIGs may carry different puncturing information. The puncturing information indicates whether each 20 MHz within the 80 MHz is punctured. In addition, transmission of the legacy preamble and the repeated signal field is still 20 MHz duplicate transmission.

Manner 2: Refer to FIG. 8. The station may send the uplink common physical layer preamble only on a frequency segment (for example, the 80 MHz) in which the allocated resource unit (a resource unit in which the data part of the uplink PPDU is located) is located based on information about the resource unit allocated to the station in the trigger frame. When the allocated resource unit is greater than one frequency segment (for example, the 80 MHz), the station may send the uplink common physical layer preamble only on a plurality of frequency segments (for example, the 80 MHz) in which the allocated resource unit is located (or understood as that the resource unit overlaps the frequency segments). The uplink common physical layer preamble includes a legacy preamble, a repeated signal field, or a U-SIG field.

For example, a frequency segment granularity is 80 MHz. If the resource unit is greater than 80 MHz, the sent uplink physical layer preamble includes a corresponding plurality of 80 MHz. The station in FIG. 3 is used as an example to describe the method for sending the uplink multi-user PPDU shown in FIG. 8. The method includes: A station 11 transmits DATA #1 on a corresponding resource unit based on a received trigger frame, and sends the common physical layer preamble on a first secondary 80 MHz. Specifically, duplicate transmission (the duplicate transmission may include necessary steps such as rotation, and details are not described herein) on each 20 MHz within the first secondary 80 MHz is performed. For another example, a station 6 transmits DATA #2 on a resource unit indicated in the received trigger frame, and sends the common physical layer preamble on a primary 80 MHz. Specifically, duplicate transmission on each 20 MHz within the primary 80 MHz is performed.

Manner 3: The station may send the uplink common physical layer preamble only in one or more 20 MHz bandwidths in which the allocated resource unit is located. For example, the uplink common physical layer preamble includes a legacy preamble (an L-STF, an L-LTF, and an L-SIG), a repeated signal field (RL-SIG), and a U-SIG field. If the allocated resource unit is greater than 20MHz, the sent uplink physical layer preamble includes a corresponding plurality of 20MHz. Optionally, the station may further send the uplink physical layer preamble on a 20 MHz sensed by the station.

It should be noted that the uplink physical layer preamble mentioned in the foregoing method is transmitted in a granularity of 20 MHz.

Transmission of the uplink common physical layer preamble by the station is duplicate transmission on each 20 MHz within an 80 MHz.

In the uplink multi-user PPDU, uplink common physical layer preambles that are transmitted on different 80 MHz may be different. Specifically, different uplink PPDUs may carry different puncturing information fields in U-SIG fields. The puncturing information field may indicate only a puncturing pattern of four 20 MHz channel within an 80 MHz in which the uplink PPDU is located, to notify another station of puncturing information of a frequency segment on which the station is located. For example, a 3-bit bitmap or a 4-bit bitmap may be used for indication. For example, 1110 indicates that a 4^{th} 20 MHz from lower frequency to higher frequency (or from higher frequency to lower frequency) within the 80 MHz is punctured. This is not limited in each implementation. In another example, it may be specified that a 20 MHz sensed by the station cannot be punctured. In this case, a puncturing bitmap only needs to indicate whether other three 20 MHz within the 80 MHz are punctured. In this case, 3 bits are required. Further, if the 20 MHz channel sensed by the station is busy, the station cannot send an uplink PPDU.

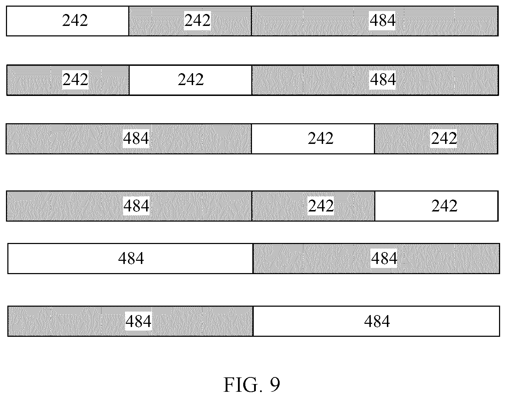

Another manner may be indicated by using a puncturing pattern. FIG. 9 shows six puncturing patterns in an 80 MHz bandwidth, where 3 bits are required. White resource units are punctured resource units, and gray resource units are nonpunctured resource units.

If resource units allocated to a single station are on different 80 MHz or a bandwidth greater than 80 MHz, U-SIG fields in uplink common physical layer preambles sent by the station on a plurality of 80 MHz may be different. It should be noted that, in the uplink multi-user PPDU, a legacy preamble field and a repeated signal field RL-SIG that are in an uplink common physical layer preamble sent by each station are the same.

In addition to the common physical layer preamble and the data part, the uplink physical layer preamble sent by the station may further include an EHT-STF (extremely high throughput-short training field, extremely high throughput-short training field) field and an EHT-LTF (extremely high throughput-long training field, extremely high throughput-long training field) field. A quantity of OFDM symbols included in the EHT-LTF field is related to a quantity of transmitted streams. Specifically, the EHT-STF field, the EHT-LTF field, and the data field may be sent only on the resource unit allocated to the station, and the resource unit is indicated by using the trigger frame.

### Embodiment 4

An embodiment of this application provides a method for sending an Acknowledgement frame by an AP.

301: The AP receives an uplink multi-user PPDU.

302: The AP generates and replies with Acknowledgement information of the uplink multi-user PPDU based on a frequency segment. Specifically, the AP replies with different Acknowledgement frames on different frequency segments. For example, the AP may send, on the frequency segment, only an Acknowledgement frame of an uplink PPDU of a station parking on the frequency segment. The Acknowledgement frame includes Ack and Block Ack frames. The Block Ack frame further includes a compressed Block Ack frame and a Multi-STA Block Ack frame. As shown in FIG. 4, after receiving a TB PPDU (an uplink PPDU), the AP sends the Multi-STA Block Ack frame.

The Multi-STABlock Ack frame with which the AP replies may be sent in an OFDMA form (for example, an EHT MU PPDU), or in a non-HT format (only a legacy preamble is used for a preamble), or in a single-user PPDU in 11n, 11ac, 11ax, or 11be.

Example 1: The Multi-STA Block Ack frame with which the AP replies may be sent in an OFDMA form. When OFDMA determines that a bandwidth of a PPDU in the frame is greater than 80 MHz, a U-SIG field and an EHT-SIG field in a downlink physical layer preamble on each 80 MHz frequency segment are different, a U-SIG field in a downlink physical layer preamble on each 20 MHz within an 80 MHz is the same, and an EHT-SIG field in a downlink physical layer preamble on each 20 MHz within an 80 MHz may be the same or different. For example, a [1 2 1 2] structure of HE-SIG B of the 802.11ax is used. In addition, the OFDMA determines that duplicate transmission is performed on both a legacy preamble field and a repeated signal field RL-SIG of the PPDU in the frame on each 20 MHz in a PPDU bandwidth.

In a specific example, the AP may send an Acknowledgement frame to a station on a resource unit on one or more 20 MHz in which an uplink common physical layer preamble sent by the station is located. There may be a plurality of 20 MHz. A quantity of 20 MHz depends on a quantity of 20 MHz on which a common physical layer preamble of an uplink PPDU is sent by the station. In addition, because a U-SIG field in a downlink physical layer preamble of a downlink OFDMA PPDU on each 80 MHz frequency segment may be different, in another specific example, the AP may also send the Acknowledgement frame to the station on a 20 MHz sensed by the station, or one or more resource units in an 80 MHz frequency segment on which a data field of the uplink PPDU sent by the station.

The EHT MU PPDU carries information about an allocated RU for the Acknowledgement frame. Refer to FIG. 4.

More specifically, sub-PPDUs sent by the station on each 80 MHz frequency segment need to be aligned, for example, end time is aligned.

Example 2: The Multi-STA Block Ack frame with which the AP replies is sent in the non-HT format.

In this embodiment, multi-user Acknowledgement information carried on each 80 MHz frequency segment may be different, and multi-user Acknowledgement information transmitted on each 20 MHz within an 80 MHz is the same. For example, a first non-HT Acknowledgement frame, for example, a Multi-STA Block Ack frame, is transmitted on a primary 80 MHz, and carries Acknowledgement information for stations 1 to 4. A second non-HT Acknowledgement frame, for example, a Multi-STA Block Ack frame, is transmitted on a secondary 80 MHz, and carries Acknowledgement information for stations 5 to 6. Compared with a previous non-HT format, duplicate transmission needs to be performed on each 20 MHz in a large bandwidth in this embodiment. In this case, overheads of a downlink multi-user Acknowledgement frame are further reduced.

Specifically, sending the Acknowledgement frame in the non-HT format includes either of the following two methods.

Method 1: The AP sends the Acknowledgement frame to the station on a frequency segment channel in which a 20 MHz channel sensed by the station is located. The frequency segment includes, for example, 80 MHz, 160 MHz, 240 MHz, or 320 MHz.

Method 2: The AP sends the Acknowledgement frame to the station on a frequency segment on which the station transmits an uplink data field or on one or more channels within an 80 MHz.

Method 3: The AP sends the Acknowledgement frame to the station on one or more channels within a 20 MHz in which the station transmits an uplink data field.

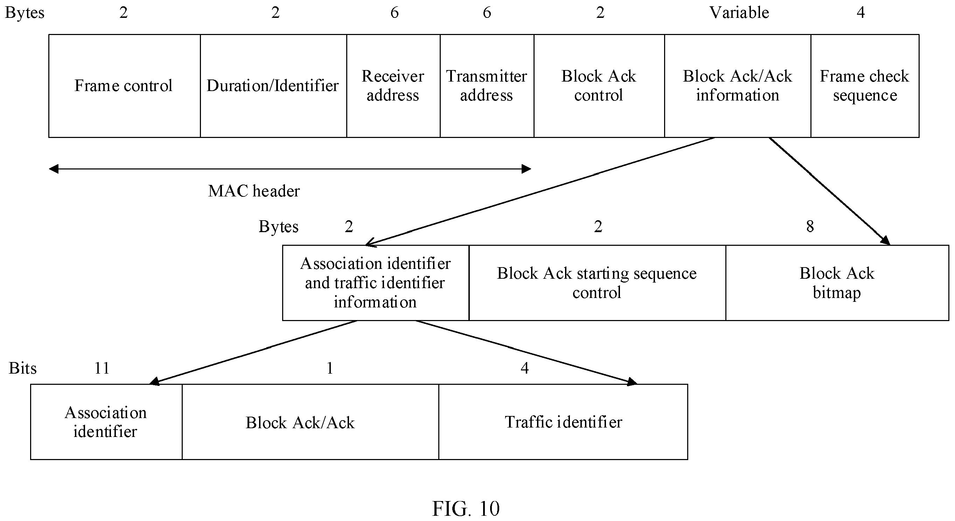

FIG. 10 shows a simple schematic diagram of a structure of an Acknowledgement frame. A Multi-STA Block Ack frame sent by an AP on each 20 MHz includes one or more pieces of block Ack/Ack information. Each piece of block Ack/Ack information is Acknowledgement information of a PPDU sent to a station. The Multi-STA Block Ack frame includes: frame control (Control frame), duration/identifier (duration/ID), receive address (Receive Address, RA), transmit address (Transmit Address, TA), block Ack control (BA Control), block Ack/Ack information (Block Acknowledgement / Acknowledgement Information, BA/ACK Info), and a frame check sequence (Frame Check Sequence, FCS). The BA/ACK Info includes: per association identifier or traffic identifier information (Per association identifier or Traffic Identifier Information, Per AID TID Info). When the BA/ACK Info is the BA, the BA/ACK Info further includes a block Ack starting sequence control (Block Acknowledgement Starting Sequence Control) and a block Ack bitmap (Block Acknowledgement bitmap). A fragment field in the block Ack starting sequence control may indicate a block Ack bitmap length. Further, an association identifier AID (association identifier) of a STA is set in first 11 bits in the Per AID TID Info, and indicates a specific station to which the AP needs to send the Acknowledgement frame. A 12^{th} bit is a block Ack/Ack indication (BA/ACK Indication), and a 13^{th} bit to a 16^{th} bit are traffic identifiers TIDs (traffic identifier), as shown in the following figure.

Non-HT Multi-STA Acknowledgement frames sent by the AP on different frequency segments (for example, an 80 MHz) carry different station Acknowledgement information. In other words, Acknowledgement frames on different frequency segments may have different lengths. Refer to Implementation 1. The Acknowledgement frames on different frequency segments may carry only Acknowledgement information of a station parking on the frequency segment.

Specifically, a Non-HT Multi-STA Acknowledgement frame transmitted on each 20 MHz on the frequency segment usually needs to be aligned.

The AP may align, by using a padding method, the Non-HT Multi-STA Acknowledgement frame transmitted on each 20 MHz. Specifically, one of the following methods may be included:
Method 1: The Non-HT Multi-STA Acknowledgement frame includes a dummy block Ack/Ack information field, used to pad the Non-HT Multi-STA Acknowledgement frame for alignment. A length of the dummy block Ack/Ack information field is the same as a length of a block Ack/Ack information field specified in a standard, but an AID field in the dummy block Ack/Ack information field is set to a special value, for example, 2046.
Method 2. The Non-HT Multi-STA Acknowledgement frame provides a longer block Ack/Ack information field. For example, a longer block Ack bitmap length is indicated by using a fragment field in the block Ack starting sequence control field.
Method 3: The Non-HT Multi-STA Acknowledgement frame includes repeated one or more pieces of block Ack/Ack information of the station. Block Ack/Ack information of a last station is repeated for one or more times, so that the Non-HT Multi-STAAcknowledgement frame is aligned.

The frequency segment in one or more embodiments of Embodiment 1 to Embodiment 4 may be further simplified into a special case, that is, each frequency segment is fixed to one size, for example, an 80 MHz. In this way, indications of information about the frequency segment can be reduced. The uplink multi-user PPDU mentioned in Embodiment 1 to Embodiment 4 includes uplink PPDUs sent by one or more stations. The one or more stations send a post physical layer preamble and a data field on a corresponding resource unit indicated by a trigger frame sent by the AP. The uplink PPDU sent by the station may be understood as a sub-PPDU of the uplink multi-user PPDU. It may also be understood that the foregoing implementations can be randomly combined without a conflict in technologies. For example, after frequency segment is flexibly performed in the manner in Embodiment 1, the trigger frame is sent in the manner in Embodiment 2, the uplink PPDU is sent based on the trigger frame in the manner in Embodiment 3, and then the Acknowledgement frame of the uplink PPDU is fed back in the manner in Embodiment 4. Certainly, an implementation may be replaced with another solution, and details are not described herein again.

A person skilled in the art may further understand that various illustrative logical blocks (illustrative logic block) and steps (step) that are listed in embodiments of this application may be implemented by using electronic hardware, computer software, or a combination thereof. Whether the functions are implemented by using hardware or software depends on particular applications and a design requirement of an entire system. A person skilled in the art may use various methods to implement the described functions for each particular application, but it should not be considered that the implementation goes beyond the scope of embodiments of this application.

This application further provides a computer-readable storage medium. The computer-readable storage medium stores a computer program. When the computer-readable storage medium is executed by a computer, functions of any one of the foregoing method embodiments is implemented.

This application further provides a computer program product, and when the computer program product is executed by a computer, functions of any one of the foregoing method embodiments are implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded or executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state disk (solid state disk, SSD)), or the like.

A person of ordinary skill in the art may understand that various numerals such as "first" and "second" in this application are merely used for differentiation for ease of description, and are not used to limit the scope of embodiments of this application or represent a sequence.

The correspondences shown in the tables in this application may be configured, or may be predefined. Values of the information in the tables are merely examples, and other values may be configured. This is not limited in this application. When a correspondence between the information and each parameter is configured, not all the correspondences shown in the tables need to be configured. For example, in the tables in this application, correspondences shown in some rows may alternatively not be configured. For another example, proper deformations and adjustments such as splitting and combination may be performed based on the foregoing tables. Names of the parameters shown in titles of the foregoing tables may alternatively be other names that can be understood by a communications apparatus, and values or representation manners of the parameters may alternatively be other values or representation manners that can be understood by the communications apparatus. During implementation of the foregoing tables, another data structure, such as an array, a queue, a container, a stack, a linear table, a pointer, a linked list, a tree, a graph, a structure, a class, a pile, or a hash table, may alternatively be used.

"Predefine" in this application may be understood as "define", "predefine", "store", "pre-store", "pre-negotiate", "pre-configure", "solidify", or "pre-burn".

A person skilled in the art may be aware that units and algorithm steps in the examples described with reference to the embodiments disclosed in this specification can be implemented by electronic hardware or an interaction of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

The foregoing descriptions are merely specific embodiments of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for sending a trigger frame in a wireless local area network, comprising:
generating, by an AP, a physical layer protocol data unit PPDU, wherein the PPDU comprises one or more trigger frames, each trigger frame corresponds to one frequency segment, and each trigger frame is used to schedule at least one or more stations parking on the corresponding frequency segment; and
sending the one or more trigger frames in the PPDU, wherein each trigger frame is carried in the corresponding frequency segment.

2. The method according to claim 1, wherein each trigger frame is used to schedule only one or more stations parking on the corresponding frequency segment.

3. The method according to claim 1, wherein different trigger frames have different content but a same length.

4. An uplink PPDU sending method, comprising:
sending an uplink common physical layer preamble only on each 20 MHz channel on a frequency segment on which a common physical layer preamble of an uplink PPDU of a station is located and that is indicated in the trigger frame, or only on each 20 MHz channel in one or more 80 MHz channels in which an allocated resource unit is located; and
sending a data part of the uplink PPDU on the resource unit allocated to the station.

5. An Acknowledgement frame sending method, comprising:
receiving, by an AP, an uplink multi-user PPDU; and
replying with Acknowledgement information of the uplink multi-user PPDU based on a frequency segment.

6. The method according to claim 5, wherein the Acknowledgement frames replied on different frequency segments are different.

7. The method according to claim 5, wherein on a frequency segment, only an Acknowledgement frame of an uplink PPDU of a station parking on the frequency segment is sent.

8. The method according to claim 6, wherein the Acknowledgement frames on different frequency segments have different content but a same length.

9. A method for receiving a trigger frame in a wireless local area network, comprising:
receiving, by a station, a trigger frame only on a frequency segment on which a sensed 20 MHz is located; and
determining, based on the trigger frame, whether the station is scheduled.

10. The method according to claim 9, comprising:
sending an uplink common physical layer preamble only on each 20 MHz channel on a frequency segment on which a common physical layer preamble of an uplink PPDU of a station is located and that is indicated in the trigger frame, or only on each 20 MHz channel in one or more 80 MHz channels in which an allocated resource unit is located; and
sending a data part of the uplink PPDU on the resource unit allocated to the station.

11. The method according to claim 9, comprising:
after sending the uplink PPDU, receiving Acknowledgement information of the uplink PPDU only on the frequency segment on which the 20 MHz sensed by the station is located.

12. A communications apparatus, wherein the communications apparatus comprises one or more modules, and is configured to perform the method according to any one of claims 1 to 8.

13. A communications apparatus, wherein the communications apparatus comprises one or more modules, and is configured to perform the method according to any one of claims 9 to 11.
